# EUROPEAN PATENT SPECIFICATION

(11) **EP 4 295 056 B1**
(45) Date of publication and mention of the grant of the patent: **18.12.2024**
(21) Application number: 22705801.3
(22) Date of filing: 15.02.2022
(51) Int. Cl.: F16B 2/12, F16B 5/06, F16B 5/12

(54) **A CLAMP UNIT FOR SECURING TOGETHER UNIVERSAL BEAMS AND A BEAMS ASSEMBLY OF UNIVERSAL BEAMS**
KLEMMEINHEIT ZUR BEFESTIGUNG VON UNIVERSALTRÄGERN UND TRÄGERANORDNUNG VON UNIVERSALTRÄGERN
UNITÉ DE SERRAGE PERMETTANT DE FIXER ENSEMBLE DES POUTRES UNIVERSELLES, ET ENSEMBLE DE POUTRES UNIVERSELLES

(30) Priority: 18.02.2021 DK PA202170075
(43) Date of publication of application: 27.12.2023
(73) Proprietor: TMR Lock ApS, 3200 Helsinge (DK)
(72) Inventor: MEISLER, Tim, 3200 Helsinge (DK); VESTERGAARD, Jørn Eiler, 3200 Helsinge (DK); PEDERSEN, Verner, 3200 Helsinge (DK)
(74) Representative: Nordic Patent Service A/S
(86) International application number: PCT/EP2022/053683
(87) International publication number: WO 2022/175269

(56) References cited:
- EP-A1- 0 032 418
- FR-A- 1 284 918

## Description

### TECHNICAL FIELD

The disclosure relates to a clamp unit for use in conjunction with three similar clamp units to secure together two substantially orthogonal universal beams. The disclosure further relates to a beam assembly comprising at least two substantially orthogonal universal beams secured together by use of the disclosed clamp units.

### BACKGROUND

In connection with construction work, such as in constructions where a large hole has been dug in the ground, and for which the ground must be prevented from slipping into the hole, it is well known to form a retaining wall, such as a sheet pile retaining wall, to prevent the ground from slipping into the hole. In order to form the retaining wall, the first step may be to knock a number of vertical universal H-type beams into the ground with a distance from one beam to another of about 50 cm. The distance between the universal beams may vary depending of the type of ground. The next step may then be to secure a horizontal guiding or support beam, which may also be a universal H-type beam, to each of the vertical beams, whereby the vertical beams can be held in position when attaching a number of wall sheets to the vertical beams for forming the retaining wall. Once the wall sheets are secured to the vertical beams, the horizontal support beam is no longer needed and can be separated from the vertical beams.

Usually, the horizontal support beam is secured to the vertical beams by welding, while the separation may be performed by flame cutting or by use of an angle grinder. However, these procedures are very inconvenient, take a long time and are rather costly.

In order to avoid the drawbacks of welding and flame cutting, a clamp unit or clip for use with three similar clamp units or clips for securing together two orthogonal universal beams is disclosed in the international patent application with publication number WO 2013/104889. The disclosed clip defines a gap between upper and lower plates, where the gap is formed for accommodating the flanges of the beams being connected. A connector piece connects the upper and lower plates of the clip. The upper plate, at an end distal from the connector piece, has an upwardly directed, orthogonal tab, which has an aperture to receive a stem of a bolt to connect the clip to an adjacent clip. The lower plate, at an end distal from the connector piece, terminates in a downwardly directed tab, which is orthogonal to the first tab and has an aperture to receive the stem of a second bolt to connect the clip to another adjacent clip.

For the clip disclosed in WO 2013/104889, the gap holds two orthogonal cut-outs for receiving orthogonal flanges of the two beams being connected. However, the opening width of these cut-outs, into which a beam flange portion is to be inserted, is constant, which may be inconvenient and which may require that the two beams are correctly positioned from start in order to insert the beam flanges into the cut-outs of the gap. Also, the two orthogonal tabs on each plate of the clip are rather narrow, with the length of the aperture receiving the stem of the connecting bolt being quite short, which may allow a slip or twist of a clip when being connected to the beam flanges and two other clips by bolts inserted into the apertures of the two tabs.

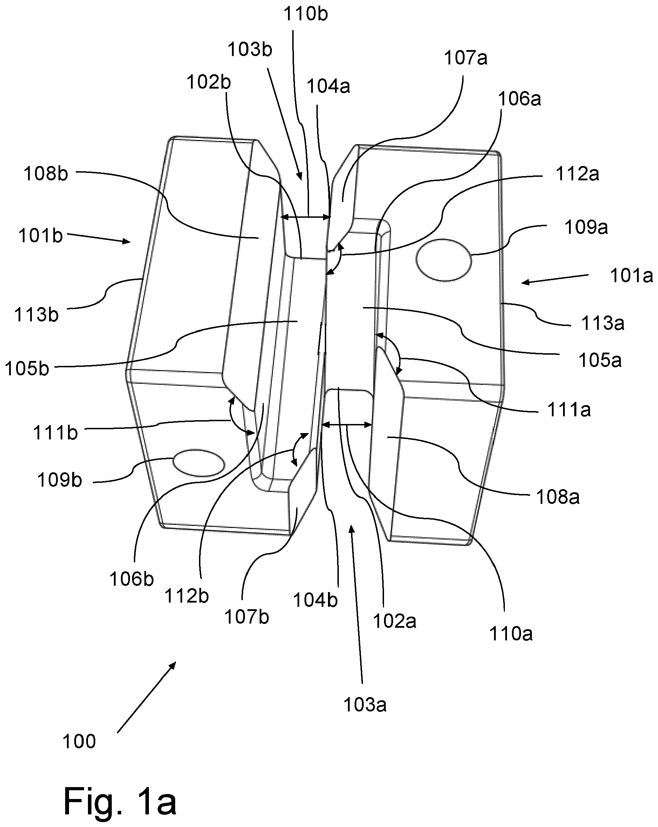

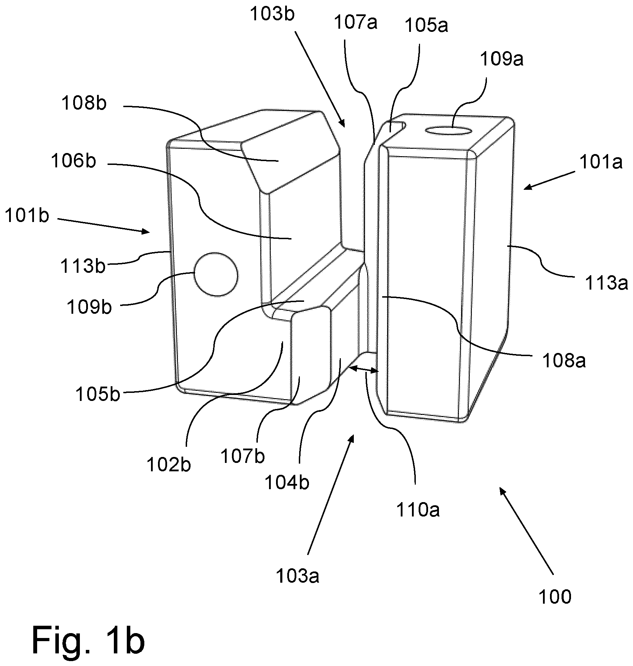

Another clamp unit or clip for securing together two orthogonal universal beams is disclosed in FR 1284918 A. The disclosed clamp unit may be used as a single unit for securing two orthogonal beams, but the clamp unit is also suitable for use in conjunction with three similar clamp units for securing together two orthogonal universal beams. The disclosed clamp unit comprises a first retention section with a first connection part and a second retention section with a second connection part, with the first and second retention sections being inter-connected via the first and second connection parts. A first cut-out (2, Fig. 1) is provided in the first retention section and facing a second cut-out (3, Fig. 1) provided in the second retention section, where the first cut-out is formed for accommodating portions of a flange (13) of a first of the orthogonal beams and the second cut-out is formed for accommodating portions of a flange (12) of a second of the orthogonal beams.

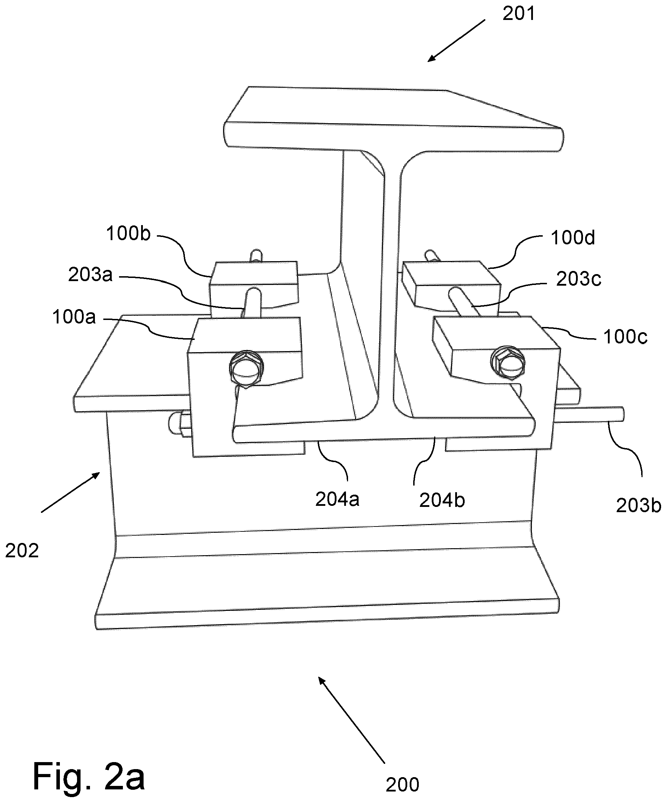

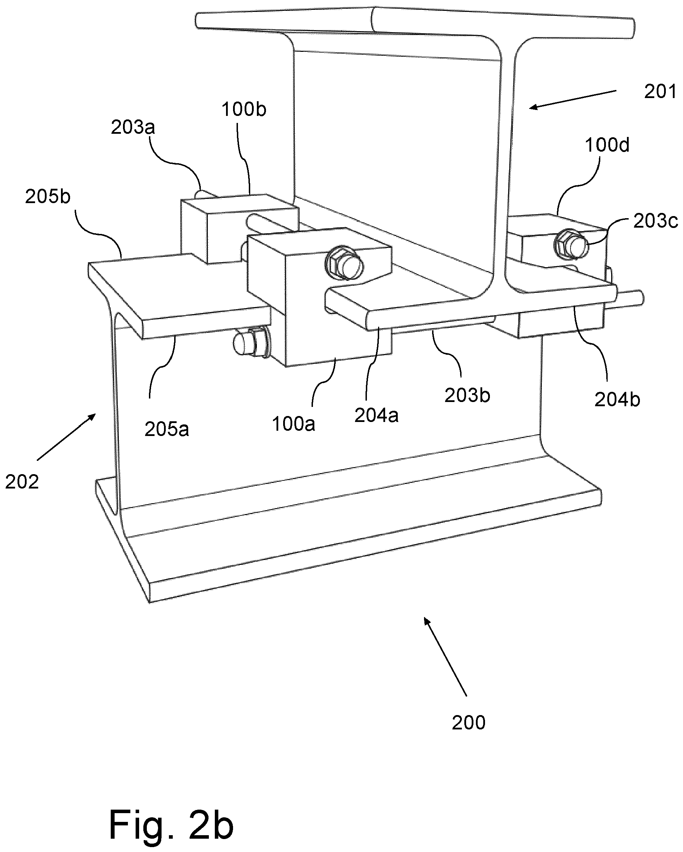

The clamp unit disclosed in FR 1284918 A has a maximum length, a maximum width and a maximum height, wherein the maximum height is defined by the distance between an upper sidewall of the first retention section and a lower sidewall of the second retention section. The first retention section holds a first throughgoing bore (4) being orthogonal to a second throughgoing bore (5) provided in the second retention section, with the first throughgoing bore (4) extending in parallel to the upper sidewall of the first retention section, and with the second throughgoing bore (5) extending in parallel to the lower sidewall of the second retention section. The first throughgoing bore (4) has a length, which may correspond to the maximum length (see Fig. 2), while the second throughgoing bore (5) has a length, which may correspond to the maximum width of the clamp unit (see Fig. 2), where the length of the first and second throughgoing bores (4, 5) differs from each other.

For the clamp unit disclosed in FR 1284918 A, each of the two cut-outs (2, 3), into which a beam flange portion is to be inserted, has an inward tapered form, which is rather wide in order to be able to receive beam flanges of different thicknesses, and a clamping screw (24) is provided in order secure the flange portion to the clamp unit.

It would be advantageous to have an improved clamp unit for securing two universal beams, which clamp unit can be easily positioned when connecting the clamp unit to the two beams. It would also be advantageous to have an improved clamp unit, which allows a tight clamping between connected clamp units and the beams flanges of the connected beams.

### SUMMARY

It is an object of the invention to provide an improved clamp unit for securing two substantially orthogonal universal beams, which clamp unit can be easily positioned when connecting the clamp unit to the two beams.

This object is achieved in accordance with a first aspect by providing a clamp unit, for use in conjunction with three similar clamp units to secure together two substantially orthogonal universal beams, said clamp unit comprising a first retention section with a first connection part and a second retention section with a second connection part, said first and second retention sections being inter-connected via the first and second connection parts;
wherein a first cut-out is provided in the first retention section and facing a second cut-out provided in the second retention section, said first cut-out formed for accommodating portions of a flange of a first of the orthogonal beams and said second cut-out formed for accommodating portions of a flange of a second of the orthogonal beams;
wherein the first cut-out is partly defined by an inner wall part of the first retention section, an abutment face of the first connection part, and an inner wall part of the second connection part, and wherein the second cut-out is partly defined by an inner wall part of the second retention section, an abutment face of the second connection part and an inner wall part of the first connection part, said abutment faces being orthogonal to each other;
wherein the first retention section holds a first throughgoing bore being orthogonal to a second throughgoing bore provided in the second retention section, said first throughgoing bore being parallel to the abutment face of the first connection part, and said second throughgoing bore being parallel to the abutment face of the second connection part;
wherein the first cut-out is further defined by a first flange insertion opening having first and second angled sidewalls, said first angled sidewall formed in the first retention section at a first obtuse angle to the inner wall part of the first retention section, and said second angled sidewall formed in the second connection part at a second obtuse angle to the inner wall part of the second connection part; and
wherein the second cut-out is further defined by a second flange insertion opening having third and fourth angled sidewalls, said third angled sidewall formed in the second retention section at a third obtuse angle to the inner wall part of the second retention section, and said fourth angled sidewall formed in the first connection part at a fourth obtuse angle to the inner wall part of the first connection part.

In use, a clamp unit is to be connected to two flange portions of two orthogonal beams by insertion of a flange portion in each of the two cut-outs. By having a wider flange insertion opening, it is easier to insert the flange portions of the beams into the cut-outs, even when the two beams are not positioned fully orthogonal to each other.

In a possible implementation form of the first aspect, the first, second, third and fourth obtuse angles are in the range of 120-175°, such as in the range of 130-170°, such as in the range of 140-165°, such as in the range 150-165°, such as about 160°.

In a possible implementation form of the first aspect, the first, second, third and fourth obtuse angles have the same value.

In a possible implementation form of the first aspect, the clamp unit has a maximum length, a maximum width and a maximum height, wherein the maximum length is defined by the distance between a first outer sidewall of the first retention section and a second outer sidewall of the second retention section, wherein the first throughgoing bore extends in parallel to the first outer sidewall and has a length equal to said maximum width, and wherein the second throughgoing bore extends in parallel to the second outer sidewall and has a length equal to said maximum height.

It is an object of the invention to provide an improved clamp unit unit for securing two substantially orthogonal universal beams, which clamp unit allows a tight clamping between connected clamp units and the beams flanges of the connected beams.

In a possible implementation form, the maximum width of the clamp unit equals the maximum height of the clamp unit, whereby the length of the first throughgoing bore equals the length of the second throughgoing bore.

In use, a connection bolt will be used to connect two clamp units to opposite flange portions of a beam by insertion of the connection bolt into parallel throughgoing bores of the two clamp units. By having long bores extending in the whole width or height of the clamp unit, the clamp units can be clamped very tightly to the flange portions, to thereby ensure a good connection of the two orthogonal beams, which are to be securely connected together.

In a possible implementation form, the width of the first cut-out between the inner wall part of the first retention section and the inner wall part of the second connection part increases slightly from bottom of the first cut-out to start of the first flange insertion opening, when measured between non-curved wall parts.

In a possible implementation form, the width of the second cut-out between the inner wall part of the second retention section and the inner wall part of the first connection part increases slightly from bottom of the second cut-out to start of the second flange insertion opening, when measured between non-curved wall parts.

In a possible implementation form, the total increase in the width of the first cut-out and in the width of the second cut-out is in the range of 2-5% of a bottom width measured between the non-curved wall parts.

For each cut-out the bottom is formed by an abutment face and the transition from the bottom abutment face to each of the inner wall parts may be curved. Thus, the bottom width between the inner wall parts should be measured between non-curved inner wall parts from just above this curved transition.

In use, a clamp unit is to be connected to two flange portions of two orthogonal universal beams by insertion of a flange portion in each of the two cut-outs. Some universal beams, such as H-type beams, may have slightly tapered flanges with a thickness, which increases inwardly towards the web of the beam. By having a corresponding tapering in the width of the cut-outs of the clamp unit, a closer fit may be obtained when securing the clamp unit to the two beam flanges.

In a possible implementation form the clamp unit is made of steel or stainless steel, which may be processed. However, the clamp unit may also be made of cast iron, engineering grade plastic, which may be formed by molding, or made of fibre enforced plastics.

According to a further third aspect there is provided a beam assembly comprising one or more first universal beams positioned in a first direction and a second universal beam positioned substantially orthogonal to said first universal beam(s), said second beam being secured to each of the first beams by use of four clamp units, which four clamp units are in accordance with any one of the clamp units of the first aspect, said four clamp units being secured together by four connecting bolts each provided with one of four nuts to complete the assembly.

In a possible implementation form of the further aspect, each connection bolt connects two retention sections of two clamp units with the connection bolt extending through aligned throughgoing bores of the two retention sections, and each clamp unit is connected to two other clamp units by a first connection bolt extending through the first throughgoing bore and a second connection bolt extending through the second throughgoing bore.

In a possible implementation form of the further aspect, opposite first and second flange portions of a first flange of a first beam are received within corresponding positioned cut-outs of the four clamp units, and opposite first and second flange portions of a first flange of the second beam are received within corresponding positioned cut-outs of the four clamp units, with edges of the flange portions engaging abutment faces of the cut-outs into which the flange portion is received.

In a possible implementation form of the further aspect, the beam assembly comprises several vertical positioned first universal beams secured to a horizontal positioned second universal beam.

The foregoing and other objects are achieved by the features of the independent claim.

Further implementation forms are apparent from the dependent claims, the description and the figures. These and other aspects of the invention will be apparent from the embodiments described below.

### BRIEF DESCRIPTION OF THE DRAWINGS

In the following detailed portion of the present disclosure, the invention will be explained in more detail with reference to the example embodiments shown in the drawings, in which:
Figs. 1a and 1b are perspective views of a clamp unit according to an example embodiment;
Figs. 2a and 2b are perspective views of an assembly of two orthogonal universal beams according to an example embodiment; and
Fig. 3 shows an assembly of three vertical universal beams secured to a horizontal universal beam.

### DETAILED DESCRIPTION

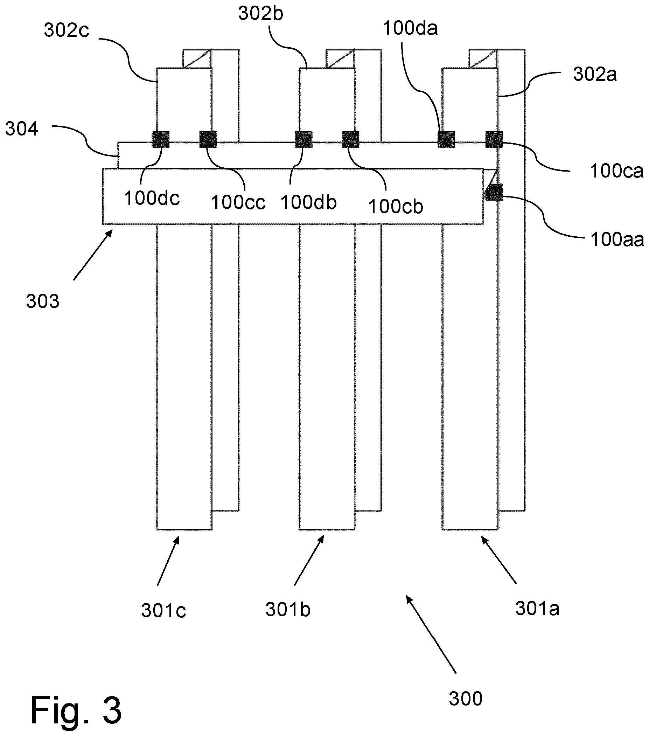

Figs. 1a and 1b are perspective views of a clamp unit 100 according to an example embodiment. The clamp unit 100 is to be used in conjunction with three similar clamp units to secure together two substantially orthogonal universal beams, see Figs. 2a, 2b and 3.

The clamp unit 100 has a first retention section 101a with a first connection part 102a and a second retention section 101b with a second connection part 102b, where the first and second retention sections 101a, 101b are inter-connected via the first and second connection parts 102a, 102b. A first cut-out 103a is provided in the first retention section 101a, with the first cut-out 103a facing a second cut-out 103b provided in the second retention section 101b. The first cut-out 103a is formed for receiving a flange portion 205a of a first flange of a first beam 202, and the second cut-out 103b is formed for receiving a flange portion 204a of a first flange of a second of the orthogonal beams 201, see Fig. 2b.

The first cut-out 103a is partly defined by an inner wall part 106a of the first retention section 101a, an abutment face 105a of the first connection part 102a, and an inner wall part 104b of the second connection part 102b, and the second cut-out 103b is partly defined by an inner wall part 106b of the second retention section 101b, an abutment face 105b of the second connection part 102b and an inner wall part 104a of the first connection part 102a, where the two abutment faces 105a, 105b are orthogonal to each other. The first cut-out 103a is further defined by a first flange insertion opening having first and second angled sidewalls 108a, 107b, where the first angled sidewall 108a is formed in the first retention section 101a at a first obtuse angle 111a to the inner wall part 106a of the first retention section 101a, and where the second angled sidewall 107b is formed in the second connection part 102b at a second obtuse angle 112b to the inner wall part 104b of the second connection part 102b. The second cut-out 103b is further defined by a second flange insertion opening having third and fourth angled sidewalls 108b, 107a, where the third angled sidewall is formed in the second retention section 101b at a third obtuse angle 111b to the inner wall part 106b of the second retention section 101b, and where the fourth angled sidewall 107a is formed in the first connection part 102a at a fourth obtuse angle 112a to the inner wall part 104a of the first connection part 102a.

The first retention section 101a holds a first throughgoing bore 109a being orthogonal to a second throughgoing bore 109b, which is provided in the second retention section 101b. The first throughgoing bore 109a is parallel to the abutment face 105a of the first connection part 102a, and the second throughgoing bore 109b is parallel to the abutment face 105b of the second connection part 102b.

It is preferred that each of the first, second, third and fourth obtuse angles 111a, 112b, 111b, 112a are in the range of 120-175°, such as in the range of 130-170°, such as in the range of 140-165°, such as in the range 150-165°, such as about 160°. It is also preferred that the first, second, third and fourth obtuse angles have the same value.

The clamp unit 100 has a maximum length, a maximum width and a maximum height, wherein the maximum length is defined by the distance between a first outer sidewall 113a of the first retention section 101a and a second outer sidewall 113b of the second retention section 101b. The first throughgoing bore 109a extends in parallel to the first outer sidewall 113a and has a length equal to the maximum width of the clamp unit 100, and the second throughgoing bore 109b extends in parallel to the second outer sidewall 113b and has a length equal to the maximum height of the clamp unit 100. It is preferred that the maximum width equals the maximum height, whereby the length of the first throughgoing bore 109a equals the length of the second throughgoing bore 109b.

It is within a preferred embodiment of the clamp unit 100 that the width 110a of the first cut-out 103a between the inner wall part 106a of the first retention section 101a and the inner wall part 104b of the second connection part 102b increases slightly from bottom of the first cut-out 103a to start of the first flange insertion opening, when measured between non-curved wall parts 106a, 104b. Similarly, it is also within a preferred embodiment of the clamp unit 100 that the width 110b of the second cut-out 103b between the inner wall part 106b of the second retention section 101b and the inner wall part 104a of the first connection part 102a increases slightly from bottom of the second cut-out 103b to start of the second flange insertion opening, when measured between non-curved wall parts 106b, 104a. The total increase in the width 110a of the first cut-out 103a and in the width 110b of the second cut-out 103b may be in the range of 2-5% of a bottom width measured between the non-curved wall parts.

For each cut-out 103a, 103b the bottom is formed by the corresponding abutment face 105a, 105b and the transition from the bottom abutment face to each of the corresponding inner wall parts 106a, 104b and 106b, 104a may be curved. Thus, the bottom width between the inner wall parts 106a, 104b for the first cut-out 103a and the inner wall parts 106b, 104a of the second cut-out 103b should be measured between non-curved inner wall parts from just above this curved transition.

In use, a clamp unit 100a is to be connected to two flange portions 204a, 205a of two orthogonal universal beams 201, 202 by insertion of a flange portion 204a, 205a in each of the two cut-outs 103b, 103a. Some universal beams, such as H-type beams, may have slightly tapered flanges with a thickness, which increases inwardly towards the web of the beam. By having a corresponding tapering in the width of the cut-outs 103a, 103b of the clamp unit 100, a closer fit may be obtained when securing the clamp unit 100a to the two beam flanges 204a, 205a, see Fig. 2b.

In the following are listed dimensions of a clamp unit 100 according to an example embodiment, for which the clamp unit 100 is dimensioned to connect universal H-type beams with height and width of 200 mm and outer flange thickness of 14 mm. For universal beams of other dimensions, the clamp unit shall be dimensioned accordingly.The clamp unit 100 has a length defined by the distance between the outer sidewall 113a of the first retention section 101a and the opposite arranged outer sidewall 113b of the second retention section 101b, which length is set to 90 mm. The width equals the height of the clamp unit 100 and is set to 80 mm, which is also the length of the throughgoing bores 109a, 109b. The diameter of the throughgoing bores 109a, 109b is set to 14 mm, and the centre of bores 109a, 109b is positioned at a distance of 40 mm from top and bottom of the corresponding retention section 101a, 101b, and at a distance of 15 mm from the outer sidewall 113a, 113b of the corresponding retention section 101a, 101b.

For the first cut-out 103a of the example embodiment, the bottom width between the non-curved wall parts of the inner wall part 106a of the first retention section 101a and the inner wall part 104b of the second retention section 101b is set to 14,2 mm and increases to 14,6 mm where the inner wall parts 106a, 104b meet the first flange insertion opening. For the first cut-out 103a, the distance from the outer sidewall 113a of the first retention section 101a to the inner wall part 106a of the first retention section 101a is set to 30,4 mm, when measured where the inner wall part 106a meets the first flange insertion opening, and the distance from the outer sidewall 113b of the second retention section 101b to the inner wall part 104b of the second retention section 101b is set to 45 mm, when measured where the inner wall part 104b meets the first flange insertion opening. The depth of the first cut-out 103a is set to 50 mm, when measured from top of the first retention section 101a to bottom of the first cut-out 103a, where the bottom of the first cut-out 103a is formed by the first abutment face 105a. For the first cut-out 103a, the depth of the first flange insertion opening is set to 15 mm, when measured from top of the first retention section 101a to the point where the inner wall part 106a meets the first flange insertion opening. The width of each of the angled sidewalls 108a, 107b of the first flange insertion opening is set to 7 mm, when measured in or projected onto a plane defined by a top plane of the first retention section 101a.

Same for the second cut-out 103b of the example embodiment, where the bottom width between the non-curved wall parts of the inner wall part 106b of the second retention section 101b and the inner wall part 104a of the first retention section 101a is set to 14,2 mm and increases to 14,6 mm where the inner wall parts 106b, 104a meet the second flange insertion opening. For the second cut-out 103b, the distance from the outer sidewall 113b of the second retention section 101b to the inner wall part 106b of the second retention section 101b is set to 30,4 mm, when measured where the inner wall part 106b meets the second flange insertion opening, and the distance from the outer sidewall 113a of the first retention section 101a to the inner wall part 104a of the first retention section 101a is set to 45 mm, when measured where the inner wall part 104a meets the second flange insertion opening. The depth of the second cut-out 103b is set to 50 mm, when measured from top of the second retention section 101b to bottom of the second cut-out 103b, where the bottom of the second cut-out 103b is formed by the second abutment face 105b. For the second cut-out 103b, the depth of the second flange insertion opening is set to 15 mm, when measured from top of the second retention section 101b to the point where the inner wall part 106b meets the second flange insertion opening. The width of each of the angled sidewalls 108b, 107a of the second flange insertion opening is set to 7 mm, when measured in or projected onto a plane defined by a top plane of the second retention section 101b.

It is preferred that the clamp unit 100 is made of steel or stainless steel, which may be processed. However, the clamp unit 100 may also be made of cast iron, aluminium, engineering grade plastic, which may be formed by molding, or made of fibre enforced plastics.

Figs. 2a and 2b are perspective views of an assembly 200 of two orthogonal universal beams according to an example embodiment. The beam assembly 200 comprises a first universal beam 202 positioned in a first direction and a second universal beam 201 positioned substantially orthogonal to the first universal beam 202. The second beam 201 is secured to the first beam 202 by use of four clamp units 100a, 100b, 100c, 100d, each of which is equal to the clamp unit 100 described in connection with Figs. 1a and 1b. The four clamp units 100a, 100b, 100c, 100d are secured together by four connecting bolts 203a, 203b, 203c, each provided with a nut to complete the assembly 200. The fourth connection bolt and the nuts are not shown in Figs. 2a and 2b.

Each connection bolt 203a, 203b, 203c connects two retention sections of two clamp units 100a, 100b, 100c, 100d, with the connection bolt 203a, 203b, 203c extending through aligned throughgoing bores 109a, 109b of the two retention sections, and each clamp unit 100a, 100b, 100c, 100d is connected to two other clamp units by a first connection bolt 203a, 203b, 202c extending through the first throughgoing bore and a second connection bolt 203a, 203b, 203c extending through the second throughgoing bore.This is illustrated in Figs. 2 a and 2b, where the first clamp unit 100a is connected to the second clamp unit 100b by a first connection bolt 203a and further connected to the third clamp unit 100c by a second connection bolt 203b. The third clamp unit 100c is further connected to the fourth clamp unit 100d by the connection bolt 203c. Finally, the fourth clamp unit 100d is connected to the second clamp unit 100b by a connection bolt not shown in Figs. 2a and 2b.

For the beam assembly 200, opposite first and second flange portions 205a, 205b of a first flange of the first beam 202 are received within corresponding positioned cut-outs of the four clamp units 100a, 100b, 100c, 100d, and opposite first and second flange portions 204a,b of a first flange of the second beam 201 are received within corresponding positioned cut-outs of the four clamp units 100a, ,100b, 100c, 100d, with edges of the flange portions engaging the abutment faces of the cut-outs into which the flange portion is received.

Each of the clamp units 100a, 100b, 100c, 100d has to be connected to a flange portion 204a, 205a, 204b, 205b of each of the two orthogonal beams 201, 202 by insertion of a flange portion in each of the two cut-outs of a clamp unit 100a, 100b, 100c, 100d. By having a wider flange insertion opening, it is easier to insert the flange portions 204a, 204b, 204c, 204d of the beams 201, 202 into the cut-outs, even when the two beams 201, 202 are not positioned fully orthogonal to each other.

When connecting the two beams 201, 202, a connection bolt 203a, 203b, 203c is used to connect two clamp units 100a, 100b, 100c, 100d to opposite flange portions 204a, 204b and 205a, 205b of a beam 201, 202 by insertion of the connection bolt into parallel throughgoing bores of the two clamp units. By having long bores extending in the whole length of the clamp unit 100a, 100b, 100c, 100d, the clamp units can be clamped very tightly to the flange portions 204a, 204b, 205a, 205b, to thereby ensure a good connection of the two orthogonal beams 201, 202, which are to be securely connected together.

Fig. 3 shows a beam assembly 300 of three vertical universal beams 301a, 301b, 301c secured to a horizontal universal beam 303. Each of the vertical beams is secured to the horizontal beam 303 as described in connection with the beam assembly 200 of Figs. 2a and 2b. The first vertical beam 301a has a first flange 302a being connected to a first flange 304 of the horizontal beam 303 by use of four clamp units 100aa, 100ca, 100da, where the fourth clamp unit is not shown in Fig. 3. The second vertical beam 301b has a first flange 302b being connected to the first flange 304 of the horizontal beam 303 by use of four clamp units 100cb, 100db, where the third and fourth clamp units are not shown in Fig. 3. The third vertical beam 301c has a first flange 302c being connected to the first flange 304 of the horizontal beam 303 by use of four clamp units 100cc, 100dc, where the third and fourth clamp units are not shown in Fig. 3.

The invention has been described in conjunction with various embodiments herein. However, other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality.

## Claims

1. A clamp unit (100), for use in conjunction with three similar clamp units to secure together two substantially orthogonal universal beams, said clamp unit comprising a first retention section (101a) with a first connection part (102a) and a second retention section (101b) with a second connection part (102b), said first and second retention sections (101a, 101b) being inter-connected via the first and second connection parts (102a, 102b);
wherein a first cut-out (103a) is provided in the first retention section (101a) and facing a second cut-out (103b) provided in the second retention section (101b), said first cut-out (103a) formed for accommodating portions of a flange of a first of the orthogonal beams and said second cut-out (103b) formed for accommodating portions of a flange of a second of the orthogonal beams;
wherein the first cut-out (103a) is partly defined by an inner wall part (106a) of the first retention section (101a), an abutment face (105a) of the first connection part (102a), and an inner wall part (104b) of the second connection part (102b), and wherein the second cut-out (103b) is partly defined by an inner wall part (106b) of the second retention section (101b), an abutment face (105b) of the second connection part (102b) and an inner wall part (104a) of the first connection part (102a), said abutment faces (105a, 105b) being orthogonal to each other; and
wherein the first retention section (101a) holds a first throughgoing bore (109a) being orthogonal to a second throughgoing bore (109b) provided in the second retention section (101b), said first throughgoing bore (109a) being parallel to the abutment face (105a) of the first connection part (102a), and said second throughgoing bore (109b) being parallel to the abutment face (105b) of the second connection part (102b); **characterised in that**
the first cut-out (103a) is further defined by a first flange insertion opening having first and second angled sidewalls (108a, 107b), said first angled sidewall (108a) formed in the first retention section (101a) at a first obtuse angle (111a) to the inner wall part (106a) of the first retention section (101a), and said second angled sidewall (107b) formed in the second connection part (102b) at a second obtuse angle (112b) to the inner wall part (104b) of the second connection part (102b); and **in that**
the second cut-out (103b) is further defined by a second flange insertion opening having third and fourth angled sidewalls (108b, 107a), said third angled sidewall formed in the second retention section (101b) at a third obtuse angle (111b) to the inner wall part (106b) of the second retention section (101b), and said fourth angled sidewall (107a) formed in the first connection part (102a) at a fourth obtuse angle (112a) to the inner wall part (104a) of the first connection part (102a).

2. A clamp unit (100) according to claim 1, wherein the first, second, third and fourth obtuse angles are in the range of 120-175°, such as in the range of 130-170°, such as in the range of 140-165°, such as in the range 150-165°, such as about 160°.

3. A clamp unit (100) according to claim 1 or 2, wherein the first, second, third and fourth obtuse angles have the same value.

4. A clamp unit (100) according to any one of the claims 1 to 3, said clamp (100) unit having a maximum length, a maximum width and a maximum height, wherein the maximum length is defined by the distance between a first outer sidewall (113a) of the first retention section (101a) and a second outer sidewall (113b) of the second retention section (101b), wherein the first throughgoing bore (109a) extends in parallel to the first outer sidewall (113a) and has a length equal to said maximum width, and wherein the second throughgoing bore (109b) extends in parallel to the second outer sidewall (113b) and has a length equal to said maximum height.

5. A clamp unit (100) according to claim 4, wherein the maximum width equals the maximum height, whereby the length of the first throughgoing bore (109a) equals the length of the second throughgoing bore (109b).

6. A clamp unit (100) according to any one of the claims 1 to 5, wherein the width (110a) of the first cut-out (103a) between the inner wall part (106a) of the first retention section (101a) and the inner wall part (104b) of the second connection part (102b) increases slightly from bottom of the first cut-out (103a) to start of the first flange insertion opening, when measured between non-curved wall parts (106a, 104b).

7. A clamp unit (100) according to any one of the claims 1 to 6, wherein the width (110b) of the second cut-out (103b) between the inner wall part (106b) of the second retention section (101b) and the inner wall part (104a) of the first connection part (102a) increases slightly from bottom of the second cut-out (103b) to start of the second flange insertion opening, when measured between non-curved wall parts (106b, 104a).

8. A clamp unit (100) according to claim 6 or 7, wherein the total increase in the width (110a) of the first cut-out (103a) and in the width (110b) of the second cut-out (103b) is in the range of 2-5% of a bottom width measured between the non-curved wall parts.

9. A beam assembly (200) comprising one or more first universal beams (202) positioned in a first direction and a second universal beam (201) positioned substantially orthogonal to said first universal beam(s), said second beam being secured to each of the first beams by use of four clamp units (100a, 100b, 100c, 100d) in accordance with any one of the claims 1 to 8, said four clamp units being secured together by four connecting bolts (203a, 203b, 203c) each provided with one of four nuts to complete the assembly.

10. A beam assembly (200) according to claim 9, wherein each connection bolt (203a, 203b, 203c) connects two retention sections (101a) of two clamp units (100a, 100b) with the connection bolt extending through aligned throughgoing bores (109a) of the two retention sections; and
wherein each clamp unit (100a) is connected to two other clamp units (100b, 100c) by a first connection bolt (203a) extending through the first throughgoing bore (109a) and a second connection bolt (203b) extending through the second throughgoing bore (109b).

11. A beam assembly (200) according to claims 9 or 10, wherein opposite first and second flange portions (205a, 205b) of a first flange of a first beam (202) are received within corresponding positioned cut-outs (103b) of the four clamp units (100a,100b,100c,100d), and opposite first and second flange portions (204a,b) of a first flange of the second beam (201) are received within corresponding positioned cut-outs (103a) of the four clamp units, with edges of the flange portions engaging abutment faces (105a,105b) of the cut-outs into which the flange portion is received.

12. A beam assembly (300) according to any one of the claims 9 to 11, comprising several vertical positioned first universal beams (301a, 301b, 301c) secured to a horizontal positioned second universal beam (303).

## Patentansprüche

1. Klemmeinheit (100) zur Verwendung in Verbindung mit drei ähnlichen Klemmeinheiten, um zwei im Wesentlichen orthogonale Universalträger aneinander zu befestigen, wobei die Klemmeinheit einen ersten Halteteilabschnitt (101a) mit einem ersten Verbindungsteil (102a) und einen zweiten Halteteilabschnitt (101b) mit einem zweiten Verbindungsteil (102b) umfasst, wobei der erste und der zweite Halteteilabschnitt (101a, 101b) über den ersten und den zweiten Verbindungsteil (102a, 102b) miteinander verbunden sind;
wobei ein erster Ausschnitt (103a) in dem ersten Halteteilabschnitt (101a) bereitgestellt ist und einem zweiten Ausschnitt (103b), der in dem zweiten Halteteilabschnitt (101b) bereitgestellt ist, zugewandt ist, wobei der erste Ausschnitt (103a) zum Aufnehmen von Abschnitten eines Flansches eines ersten der orthogonalen Träger gebildet ist, und der zweite Ausschnitt (103b) zum Aufnehmen von Abschnitten eines Flansches eines zweiten der orthogonalen Träger gebildet ist;
wobei der erste Ausschnitt (103a) teilweise durch ein Innenwandteil (106a) des ersten Halteteilabschnitts (101a), eine Anlagefläche (105a) des ersten Verbindungsteils (102a) und einen Innenwandteil (104b) des zweiten Verbindungsteils (102b) definiert ist und wobei der zweite Ausschnitt (103b) teilweise durch einen Innenwandteil (106b) des zweiten Halteteilabschnitts (101b), eine Anlagefläche (105b) des zweiten Verbindungsteils (102b) und einen Innenwandteil (104a) des ersten Verbindungsteils (102a) definiert ist, wobei die Anlageflächen (105a, 105b) zueinander orthogonal sind; und
wobei der erste Halteteilabschnitt (101a) eine erste Durchgangsbohrung (109a) hält, die orthogonal zu einer zweiten Durchgangsbohrung (109b) ist, die in dem zweiten Halteteilabschnitt (101b) bereitgestellt ist, wobei die erste Durchgangsbohrung (109a) parallel zu der Anlagefläche (105a) des ersten Verbindungsteils (102a) ist und die zweite Durchgangsbohrung (109b) parallel zu der Anlagefläche (105b) des zweiten Verbindungsteils (102b) ist; **dadurch gekennzeichnet, dass**
der erste Ausschnitt (103a) ferner durch eine erste Flanscheinführöffnung definiert ist, die eine erste und eine zweite abgewinkelte Seitenwand (108a, 107b) aufweist, wobei die erste abgewinkelte Seitenwand (108a) in dem ersten Halteteilabschnitt (101a) in einem ersten stumpfen Winkel (111a) zu dem Innenwandteil (106a) des ersten Halteteilabschnitts (101a) gebildet ist, und die zweite abgewinkelte Seitenwand (107b) in dem zweiten Verbindungsteil (102b) in einem zweiten stumpfen Winkel (112b) zu dem Innenwandteil (104b) des zweiten Verbindungsteils (102b) gebildet ist; und dass der zweite Ausschnitt (103b) ferner durch eine zweite Flanscheinführöffnung definiert ist, die eine dritte und eine vierte abgewinkelte Seitenwand (108b, 107a) aufweist, wobei die dritte abgewinkelte Seitenwand in dem zweiten Halteteilabschnitt (101b) in einem dritten stumpfen Winkel (111b) zu dem Innenwandteil (106b) des zweiten Halteteilabschnitts (101b) gebildet ist, und die vierte abgewinkelte Seitenwand (107a) in dem ersten Verbindungsteil (102a) in einem vierten stumpfen Winkel (112a) zu dem Innenwandteil (104a) des ersten Verbindungsteils (102a) gebildet ist.

2. Klemmeinheit (100) nach Anspruch 1, wobei der erste, zweite, dritte und vierte stumpfe Winkel in dem Bereich von 120-175° liegen, wie etwa in dem Bereich von 130-170°, wie etwa in dem Bereich von 140-165°, wie etwa in dem Bereich von 150-165°, wie etwa 160°.

3. Klemmeinheit (100) nach Anspruch 1 oder 2, wobei der erste, zweite, dritte und vierte stumpfe Winkel den gleichen Wert aufweisen.

4. Klemmeinheit (100) nach einem der Ansprüche 1 bis 3, wobei die Klemmeinheit (100) eine maximale Länge, eine maximale Breite und eine maximale Höhe aufweist, wobei die maximale Länge durch den Abstand zwischen einer ersten äußeren Seitenwand (113a) des ersten Halteteilabschnitts (101a) und einer zweiten äußeren Seitenwand (113b) des zweiten Halteteilabschnitts (101b) definiert ist, wobei sich die erste Durchgangsbohrung (109a) parallel zu der ersten äußeren Seitenwand (113a) erstreckt und eine Länge aufweist, die gleich der maximalen Breite ist, und wobei sich die zweite Durchgangsbohrung (109b) parallel zu der zweiten äußeren Seitenwand (113b) erstreckt und eine Länge aufweist, die gleich der maximalen Höhe ist.

5. Klemmeinheit (100) nach Anspruch 4, wobei die maximale Breite gleich der maximalen Höhe ist, wodurch die Länge der ersten Durchgangsbohrung (109a) gleich der Länge der zweiten Durchgangsbohrung (109b) ist.

6. Klemmeinheit (100) nach einem der Ansprüche 1 bis 5, wobei die Breite (110a) des ersten Ausschnitts (103a) zwischen dem Innenwandteil (106a) des ersten Halteteilabschnitts (101a) und dem Innenwandteil (104b) des zweiten Verbindungsteils (102b), gemessen zwischen nicht gekrümmten Wandteilen (106a, 104b), vom Boden des ersten Ausschnitts (103a) zum Beginn der ersten Flanscheinführöffnung leicht zunimmt.

7. Klemmeinheit (100) nach einem der Ansprüche 1 bis 6, wobei die Breite (110b) des zweiten Ausschnitts (103b) zwischen dem Innenwandteil (106b) des zweiten Halteteilabschnitts (101b) und dem Innenwandteil (104a) des ersten Verbindungsteils (102a), gemessen zwischen nicht gekrümmten Wandteilen (106b, 104a), vom Boden des zweiten Ausschnitts (103b) zum Beginn der zweiten Flanscheinführöffnung leicht zunimmt.

8. Klemmeinheit (100) nach Anspruch 6 oder 7, wobei die Gesamtzunahme der Breite (110a) des ersten Ausschnitts (103a) und der Breite (110b) des zweiten Ausschnitts (103b) in dem Bereich von 2-5 % einer zwischen den nicht gekrümmten Wandteilen gemessenen Bodenbreite liegt.

9. Trägeranordnung (200), die einen oder mehrere erste Universalträger (202) umfasst, die in einer ersten Richtung positioniert sind, und einen zweiten Universalträger (201), der im Wesentlichen orthogonal zu dem/den ersten Universalträger(n) positioniert ist, wobei der zweite Träger an jedem der ersten Träger unter Verwendung von vier Klemmeinheiten (100a, 100b, 100c, 100d) gemäß einem der Ansprüche 1 bis 8 befestigt ist, wobei die vier Klemmeinheiten durch vier Verbindungsbolzen (203a, 203b, 203c) aneinander befestigt sind, die jeweils mit einer von vier Muttern versehen sind, um die Anordnung zu vervollständigen.

10. Trägeranordnung (200) nach Anspruch 9, wobei jeder Verbindungsbolzen (203a, 203b, 203c) zwei Halteteilabschnitte (101a) von zwei Klemmeinheiten (100a, 100b) verbindet, wobei sich der Verbindungsbolzen durch ausgerichtete Durchgangsbohrungen (109a) der zwei Halteteilabschnitte erstreckt; und
wobei jede Klemmeinheit (100a) mit zwei anderen Klemmeinheiten (100b, 100c) durch einen ersten Verbindungsbolzen (203a), der sich durch die erste Durchgangsbohrung (109a) erstreckt, und einen zweiten Verbindungsbolzen (203b), der sich durch die zweite Durchgangsbohrung (109b) erstreckt, verbunden ist.

11. Trägeranordnung (200) nach Anspruch 9 oder 10, wobei entgegengesetzte erste und zweite Flanschabschnitte (205a, 205b) eines ersten Flansches eines ersten Trägers (202) in entsprechenden positionierten Ausschnitten (103b) der vier Klemmeinheiten (100a, 100b, 100c, 100d) aufgenommen sind, und entgegengesetzte erste und zweite Flanschabschnitte (204a,b) eines ersten Flansches des zweiten Trägers (201) in entsprechenden positionierten Ausschnitten (103a) der vier Klemmeinheiten aufgenommen sind, wobei Kanten der Flanschabschnitte in Anlageflächen (105a, 105b) der Ausschnitte eingreifen, in denen der Flanschabschnitt aufgenommen ist.

12. Trägeranordnung (300) nach einem der Ansprüche 9 bis 11, die mehrere vertikal positionierte erste Universalträger (301a, 301b, 301c) umfasst, die an einem horizontal positionierten zweiten Universalträger (303) befestigt sind.

## Revendications

1. Unité de serrage (100), à utiliser conjointement avec trois unités de serrage similaires pour fixer ensemble deux poutres universelles sensiblement orthogonales, ladite unité de serrage comprenant une première section de retenue (101a) avec une première partie de connexion (102a) et une seconde section de retenue (101b) avec une seconde partie de connexion (102b), lesdites première et seconde sections de retenue (101a, 101b) étant interconnectées via les première et seconde parties de connexion (102a, 102b) ;
dans laquelle une première découpe (103a) est prévue dans la première section de retenue (101a) et fait face à une seconde découpe (103b) prévue dans la seconde section de retenue (101b), ladite première découpe (103a) étant formée pour recevoir des parties d'une bride d'une première des poutres orthogonales et ladite seconde découpe (103b) étant formée pour recevoir des parties d'une bride d'une seconde des poutres orthogonales ;
dans laquelle la première découpe (103a) est partiellement définie par une partie de paroi interne (106a) de la première section de retenue (101a), une face de butée (105a) de la première partie de connexion (102a) et une partie de paroi interne (104b) de la seconde partie de connexion (102b), et dans lequel la seconde découpe (103b) est partiellement définie par une partie de paroi interne (106b) de la seconde section de retenue (101b), une face de butée (105b) de la seconde partie de connexion (102b) et une partie de paroi interne (104a) de la première partie de connexion (102a), lesdites faces de butée (105a, 105b) étant orthogonales l'une à l'autre ; et
dans laquelle la première section de retenue (101a) maintient un premier alésage traversant (109a) orthogonal à un second alésage traversant (109b) prévu dans la seconde section de retenue (101b), ledit premier alésage traversant (109a) étant parallèle à la face de butée (105a) de la première partie de connexion (102a), et ledit second alésage traversant (109b) étant parallèle à la face de butée (105b) de la seconde partie de connexion (102b) ; **caractérisée en ce que**
la première découpe (103a) est en outre définie par une première ouverture d'insertion de bride ayant des première et deuxième parois latérales angulaires (108a, 107b), ladite première paroi latérale angulaire (108a) formée dans la première section de retenue (101a) au niveau d'un premier angle obtus (111a) par rapport à la partie de paroi interne (106a) de la première section de retenue (101a), et ladite deuxième paroi latérale angulaire (107b) formée dans la seconde partie de connexion (102b) au niveau d'un second angle obtus (112b) par rapport à la partie de paroi interne (104b) de la seconde partie de connexion (102b) ; et **en ce que**
la seconde découpe (103b) est en outre définie par une seconde ouverture d'insertion de bride ayant des troisième et quatrième parois latérales angulaires (108b, 107a), ladite troisième paroi latérale angulaire formée dans la seconde section de rétention (101b) selon un troisième angle obtus (111b) par rapport à la partie de paroi interne (106b) de la seconde section de rétention (101b), et ladite quatrième paroi latérale angulaire (107a) formée dans la première partie de connexion (102a) selon un quatrième angle obtus (112a) par rapport à la partie de paroi interne (104a) de la première partie de connexion (102a).

2. Unité de serrage (100) selon la revendication 1, dans laquelle les premier, deuxième, troisième et quatrième angles obtus sont dans la plage de 120-175°, tels que dans la plage de 130-170°, tels que dans la plage de 140-165°, tels que dans la plage de 150-165°, tels qu'environ 160°.

3. Unité de serrage (100) selon la revendication 1 ou 2, dans laquelle les premier, deuxième, troisième et quatrième angles obtus ont la même valeur.

4. Unité de serrage (100) selon l'une quelconque des revendications 1 à 3, ladite unité de serrage (100) ayant une longueur maximale, une largeur maximale et une hauteur maximale, dans laquelle la longueur maximale est définie par la distance entre une première paroi latérale extérieure (113a) de la première section de retenue (101a) et une deuxième paroi latérale extérieure (113b) de la seconde section de retenue (101b), dans laquelle le premier alésage traversant (109a) s'étend parallèlement à la première paroi latérale extérieure (113a) et a une longueur égale à ladite largeur maximale, et dans laquelle le second alésage traversant (109b) s'étend parallèlement à la deuxième paroi latérale extérieure (113b) et a une longueur égale à ladite hauteur maximale.

5. Unité de serrage (100) selon la revendication 4, dans laquelle la largeur maximale est égale à la hauteur maximale, moyennant quoi la longueur du premier alésage traversant (109a) est égale à la longueur du second alésage traversant (109b).

6. Unité de serrage (100) selon l'une quelconque des revendications 1 à 5, dans laquelle la largeur (110a) de la première découpe (103a) entre la partie de paroi intérieure (106a) de la première section de retenue (101a) et la partie de paroi intérieure (104b) de la seconde partie de connexion (102b) augmente légèrement à partir du fond de la première découpe (103a) jusqu'au début de la première ouverture d'insertion de bride, lorsqu'elle est mesurée entre des parties de paroi non incurvées (106a, 104b).

7. Unité de serrage (100) selon l'une quelconque des revendications 1 à 6, dans laquelle la largeur (110b) de la seconde découpe (103b) entre la partie de paroi intérieure (106b) de la seconde section de retenue (101b) et la partie de paroi intérieure (104a) de la première partie de connexion (102a) augmente légèrement depuis le bas de la seconde découpe (103b) jusqu'au début de la seconde ouverture d'insertion de bride, lorsqu'elle est mesurée entre des parties de paroi non incurvées (106b, 104a).

8. Unité de serrage (100) selon la revendication 6 ou 7, dans laquelle l'augmentation totale de la largeur (110a) de la première découpe (103a) et de la largeur (110b) de la seconde découpe (103b) est dans la plage de 2 à 5 % d'une largeur de fond mesurée entre les parties de paroi non incurvées.

9. Ensemble de poutre (200) comprenant une ou plusieurs premières poutres universelles (202) positionnées dans une première direction et une seconde poutre universelle (201) positionnée sensiblement orthogonalement à ladite ou auxdites premières poutres universelles, ladite seconde poutre étant fixée à chacune des premières poutres à l'aide de quatre unités de serrage (100a, 100b, 100c, 100d) selon l'une quelconque des revendications 1 à 8, lesdites quatre unités de serrage étant fixées ensemble par quatre boulons de connexion (203a, 203b, 203c) chacun muni de l'un des quatre écrous pour compléter l'ensemble.

10. Ensemble de poutre (200) selon la revendication 9, dans lequel chaque boulon de connexion (203a, 203b, 203c) connecte deux sections de retenue (101a) de deux unités de serrage (100a, 100b) avec le boulon de connexion s'étendant à travers des alésages traversants alignés (109a) des deux sections de retenue ; et
dans lequel chaque unité de serrage (100a) est connectée à deux autres unités de serrage (100b, 100c) par un premier boulon de connexion (203a) s'étendant à travers le premier alésage traversant (109a) et un second boulon de connexion (203b) s'étendant à travers le second alésage traversant (109b).

11. Ensemble de poutre (200) selon les revendications 9 ou 10, dans lequel des première et seconde parties de bride opposées (205a, 205b) d'une première bride d'une première poutre (202) sont reçues dans des découpes positionnées correspondantes (103b) des quatre unités de serrage (100a, 100b, 100c, 100d), et des première et seconde parties de bride opposées (204a,b) d'une première bride de la seconde poutre (201) sont reçues dans des découpes positionnées correspondantes (103a) des quatre unités de serrage, les bords des parties de bride venant en contact avec les faces de butée (105a, 105b) des découpes dans lesquelles la partie de bride est reçue.

12. Ensemble de poutre (300) selon l'une quelconque des revendications 9 à 11, comprenant plusieurs premières poutres universelles positionnées verticalement (301a, 301b, 301c) fixées à une seconde poutre universelle positionnée horizontalement (303).
